# EUROPEAN PATENT APPLICATION

(11) **EP 4 418 115 A1**
(43) Date of publication of application: **21.08.2024**
(21) Application number: 22880333.4
(22) Date of filing: 12.10.2022
(51) Int. Cl.: G06F 9/455

(54) **TRUSTED MEASUREMENT METHOD AND APPARATUS, COMPUTER DEVICE, AND READABLE MEDIUM**

(30) Priority: 12.10.2021 CN 202111186512
(71) Applicant: ZTE Corporation, Shenzhen, Guangdong 518057 (CN)
(72) Inventor: ZHANG, Min, Shenzhen, Guangdong 518057 (CN); WANG, Liang, Shenzhen, Guangdong 518057 (CN); TAN, Hu, Shenzhen, Guangdong 518057 (CN); LIU, Jianjun, Shenzhen, Guangdong 518057 (CN); CAI, Qu, Shenzhen, Guangdong 518057 (CN); ZHOU, Jia, Shenzhen, Guangdong 518057 (CN); XUE, Zhihong, Shenzhen, Guangdong 518057 (CN)
(74) Representative: Canzler & Bergmeier Patentanwälte Partnerschaft mbB
(86) International application number: PCT/CN2022/124804
(87) International publication number: WO 2023/061397

(57) **Abstract**

The present disclosure provides a trusted measurement method, comprising: under the condition that a trusted measurement apparatus is subjected to trusted boot, connecting a computing server, and determining a boot mode of a first boot loader of the computing server; in response to the first boot loader being a trusted guide mode, obtaining a first group of trusted measurement results stored in the computing server; and in response to the first group of trusted measurement results being the same as the pre-stored first group of expected trusted measurement values, determining that the computing server is subjected to trusted boot, wherein the first group of expected trusted measurement values are delivered by a security master control server to the trusted measurement apparatus. The present disclosure also provides a trusted measurement apparatus, a computer device, and a readable medium.

## Description

### CROSS REFERENCE TO RELATED APPLICATIONS

The present disclosure claims the priority to Chinese Patent Application No. CN202111186512.8 entitled "TRUSTED MEASUREMENT METHOD AND APPARATUS, COMPUTER DEVICE, AND READABLE MEDIUM" and filed on October 12, 2021, the contents of which are incorporated herein by reference in their entirety.

### TECHNICAL FIELD

The present disclosure relates to the technical field of cloud computing, and in particular, to a trusted measurement method and apparatus, a computer device, and a readable medium.

### BACKGROUND

In cloud computing, unified management and shielding of low-level hardware are carried out through a virtualization layer, and computing services are provided for users as required, thereby realizing resource sharing and improving resource utilization. However, a cloud platform management program is deployed on a server, which usually causes a performance loss of the server; and the cloud platform management program and a service virtual machine are deployed on the same server and are not physically isolated, resulting in potential security problems.

In order to solve the above problems, an advanced solution in the art is to offload modules of a cloud platform, such as a control module, a computing module, a network module, and a storage module, from the server onto a control daughter card, so that no performance loss of the server is caused, and all computing capabilities of a physical machine can be used by a user virtual machine. After virtualized software is offloaded onto a smart network interface card, the virtualized software is completely isolated from user computing resources, which can ensure zero interference in performance. How to perform effective supervision on trusted measurement of a computing server under such condition so as to ensure security and credibility of the whole cloud platform has become a problem which must be solved.

### SUMMARY

The present disclosure provides a trusted measurement method and apparatus, a computer device, and a readable medium.

In a first aspect, an embodiment of the present disclosure provides a trusted measurement method applied to a trusted measurement apparatus, including: in a case of trusted boot of the trusted measurement apparatus, connecting a computing server, and determining a boot mode of a first boot loader of the computing server; in response to the first boot loader being in a trusted boot mode, acquiring a first set of trusted measurement results stored in the computing server; and in response to the first set of trusted measurement results being the same as a pre-stored first set of trusted measurement expected values, determining trusted boot of the computing server, wherein the first set of trusted measurement expected values are issued to the trusted measurement apparatus by a security master control server.

In another aspect, an embodiment of the present disclosure further provides a trusted measurement apparatus, including: a first communication module and a first processing module, the first communication module being configured to connect a computing server in a case of trusted boot of the trusted measurement apparatus, and acquire a first set of trusted measurement results stored in the computing server; and the first processing module being configured to determine a boot mode of a first boot loader of the computing server, instruct, in a case of the first boot loader being in a trusted boot mode, the first communication module to acquire the first set of trusted measurement results stored in the computing server, and determine trusted boot of the computing server in response to the first set of trusted measurement results being the same as a pre-stored first set of trusted measurement expected values, wherein the first set of trusted measurement expected values are issued to the trusted measurement apparatus by a security master control server.

In still another aspect, an embodiment of the present disclosure further provides a computer device, including: one or more processors; and a storage device having one or more programs stored thereon; and when the one or more programs are executed by the one or more processors, the one or more processors are caused to implement the trusted measurement method described above.

In yet another aspect, an embodiment of the present disclosure further provides a computer readable medium having stored thereon a computer program which, when executed by a processor, causes the processor to implement the trusted measurement method described above.

### BRIEF DESCRIPTION OF DRAWINGS

FIG. 1 is a schematic structural diagram of a system according to an embodiment of the present disclosure;
FIG. 2 is a flowchart illustrating a trusted measurement method according to an embodiment of the present disclosure;
FIG. 3 is another flowchart illustrating a trusted measurement method according to an embodiment of the present disclosure;
FIG. 4 is still another flowchart illustrating a trusted measurement method according to an embodiment of the present disclosure;
FIG. 5 is a flowchart of determining whether trusted boot of a virtual machine succeeds according to an embodiment of the present disclosure;
FIG. 6 is another flowchart of determining whether trusted boot of a virtual machine succeeds according to an embodiment of the present disclosure;
FIG. 7 is a schematic structural diagram of a system in a specific example according to an embodiment of the present disclosure;
FIG. 8 is a schematic structural diagram of a trusted measurement apparatus according to an embodiment of the present disclosure;
FIG. 9 is another schematic structural diagram of a trusted measurement apparatus according to an embodiment of the present disclosure; and
FIG. 10 is still another schematic structural diagram of a trusted measurement apparatus according to an embodiment of the present disclosure.

### DETAIL DESCRIPTION OF EMBODIMENTS

Exemplary embodiments will be described more fully below with reference to the drawings, but the exemplary embodiments may be embodied in different forms, and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of' used herein indicate(s) the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

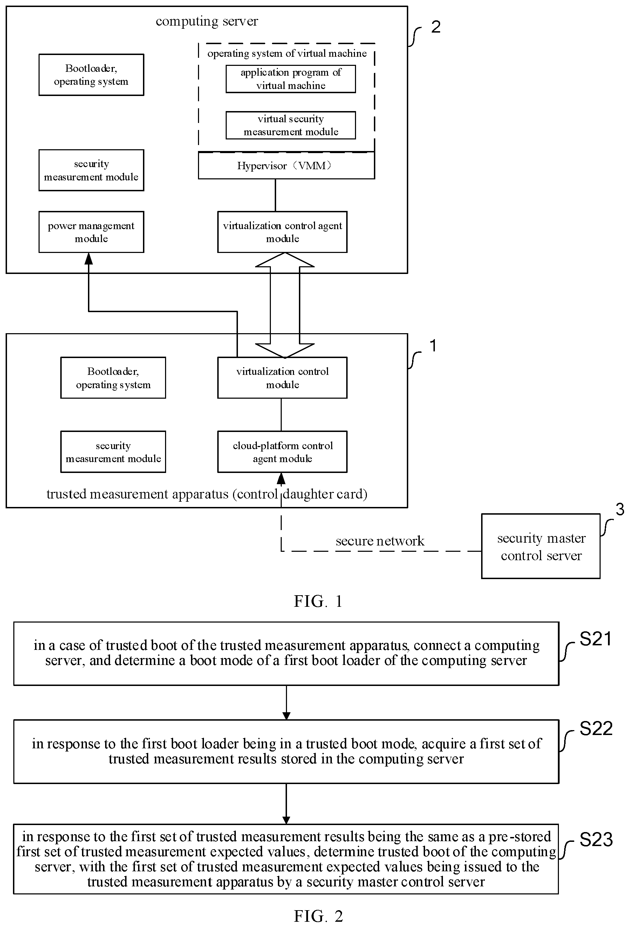

A trusted measurement method provided in the embodiments of the present disclosure is applicable to a system shown in FIG. 1.

As shown in FIG. 1, the system includes a trusted measurement apparatus 1, a computing server 2, and a security master control server 3. The trusted measurement apparatus 1 is a control daughter card, is connected to the computing server 2 via a peripheral bus interface, and is connected to the security master control server 3 via a secure network encrypted by a digital certificate. The trusted measurement apparatus 1 includes a Central Processing Unit (CPU), a memory, an operating system, and a security measurement module. The peripheral bus interface may include, but is not limited to, a network interface, a Peripheral Component Interconnect (PCI) interface, a Peripheral Component Interconnect Express (PCIE) interface, a Serial Peripheral Interface (SPI), an Inter-Integrated Circuit (I2C) interface, and a Small Computer System Interface (SCSI). The computing server 2 serves as a physical server for providing computing resources (a CPU, a memory, storage resources, network resources, etc.) for a virtual machine, and the computing resources provided by the computing server 2 may be carried by a board card of the computing server 2, or may be provided through various buses or networks. Both the computing server 2 and the trusted measurement apparatus 1 are provided with respective hardware security measurement modules. The security measurement modules include, but are not limited to, a passive measurement security chip (e.g., a Trusted Platform Module (TPM)) or an active measurement security chip (e.g., a Trusted Cryptography Module (TCM) or a Trusted Platform Control Module (TPCM) card) commonly used in the art. The security measurement modules are provided with a built-in hardware root of trust and a built-in cryptographic algorithm, and may perform static or dynamic measurement on the whole systems. The security master control server 3 serves as a root of trust of the whole cloud platform and stores all trusted measurement expected values of all the trusted measurement apparatus 1, the computing server 2, and the virtual machine.

The trusted measurement apparatus 1 includes a virtualization control module and a cloud-platform control agent module. The virtualization control module is a program residing in the trusted measurement apparatus 1, is connected to a virtualization control agent module on the computing server 2 via a peripheral interface channel, and is capable of performing command conversion on a virtualization management command from the security master control server 3 according to a type and configuration information of the computing server 2, so as to realize monitoring of trusted measurement processes of the computing server 2 and the virtual machine through the virtualization control agent module, and control a life cycle of the virtual machine; and the virtualization control module may be connected to a power management module via a dedicated line such as an Intelligent Platform Management Interface (IPMI), so as to control a power state of the computing server 2. The cloud-platform control agent module is a program residing in the trusted measurement apparatus 1, and is subjected to dynamic trusted measurement as the trusted measurement apparatus 1 is started. The cloud-platform control agent module receives and stores the trusted measurement expected values of the trusted measurement apparatus 1, the computing server 2, and the virtual machine running on the computing server 2, with the trusted measurement expected values issued by the security master control server 3 through the encrypted network authenticated by the digital certificate. The trusted measurement expected values are encrypted with a unique private key of the security master control server 3, and are stored in the security measurement module of the trusted measurement apparatus 1. When being used, the trusted measurement expected values may be decrypted with a public key of the digital certificate of the security master control server 3, so that tampering of the trusted measurement expected values may be avoided.

The computing server 2 includes the virtualization control agent module and a Virtual Machine Monitor (VMM). The virtualization control agent module is a program residing in the computing server 2, is subjected to trusted measurement as the computing server 2 is started, and communicates with the virtualization control module of the trusted measurement apparatus 1 via the peripheral bus interface. The VMM is also called a hypervisor, is software, firmware or hardware for creating and executing the virtual machine, and is capable of accessing an internal operating system of the virtual machine and executing a corresponding command by the virtio channel technology.

As shown in FIG. 2, a trusted measurement method according to an embodiment of the present disclosure is applicable to the trusted measurement apparatus, and includes the following operations S21 to S23.

At operation S21, in a case of trusted boot of the trusted measurement apparatus, the computing server is connected, and a boot mode of a first boot loader of the computing server is determined.

The trusted measurement apparatus 1 and the computing server 2 are sequentially powered on. When being started, the trusted measurement apparatus 1 and the computing server 2 perform trusted boot through respective security measurement modules. The trusted measurement apparatus 1 completes dynamic measurement on bootloader (a boot loader) thereof, the operating system, the virtualization control module, and the cloud-platform control agent module. The computing server 2 completes dynamic measurement on bootloader thereof, the operating system, and the virtualization control agent module.

At this operation, after the trusted boot of the trusted measurement apparatus 1, the virtualization control module thereof is connected, via a hardware channel, to the virtualization control agent module running on the computing server 2, and executes a query command related to the security measurement module through the virtualization control agent module, so as to determine whether the boot mode of bootloader (i.e., the first boot loader) of the computing server 2 is a trusted boot mode.

At operation S22, in response to the first boot loader being in the trusted boot mode, a first set of trusted measurement results stored in the computing server is acquired.

At this operation, in a case where the trusted measurement apparatus 1 determines that the first boot loader is in the trusted boot mode, the virtualization control module of the trusted measurement apparatus 1 reads, through the virtualization control agent module of the computing server 2, the measurement results (i.e., the first set of trusted measurement results) stored in a Platform Configuration Register (PCR) of the security measurement module in the computing server 2. The first set of trusted measurement results includes a plurality of measurement values, e.g., a measurement value of the security measurement module, and a measurement value of the virtualization control agent module.

At operation S23, in response to the first set of trusted measurement results being the same as a pre-stored first set of trusted measurement expected values, trusted boot of the computing server is determined, with the first set of trusted measurement expected values being issued to the trusted measurement apparatus by the security master control server.

At this operation, the trusted measurement apparatus 1 compares each measurement value from the first set of trusted measurement results with each expected value from the pre-stored first set of trusted measurement expected values, and determines the trusted boot of the computing server 2 if each measurement result is the same as a corresponding expected value.

The security master control server 3 issues the trusted measurement expected values of the trusted measurement apparatus 1 and the trusted measurement expected values of the computing server 2 (i.e., the first set of trusted measurement expected values) to the trusted measurement apparatus 1 in advance through the encrypted network. In some embodiments, the trusted measurement expected values may be issued in response to an active request of the trusted measurement apparatus 1. The trusted measurement expected values may be transmitted through the encrypted network authenticated by the digital certificate, and encrypted and stored in the security measurement module of the trusted measurement apparatus 1. When being used, the trusted measurement expected values may be decrypted with the public key of the digital certificate of the security master control server 3.

The trusted measurement method provided in the embodiments of the present disclosure is applicable to the trusted measurement apparatus, and includes: in the case of the trusted boot of the trusted measurement apparatus, connecting the computing server, and determining the boot mode of the first boot loader of the computing server; in response to the first boot loader being in the trusted boot mode, acquiring the first set of trusted measurement results stored in the computing server; and in response to the first set of trusted measurement results being the same as the pre-stored first set of trusted measurement expected values, determining that the trusted boot of the computing server, with the first set of trusted measurement expected values being issued to the trusted measurement apparatus by the security master control server. According to the embodiments of the present disclosure, the security master control server issues the first set of trusted measurement expected values to the trusted measurement apparatus, and the trusted measurement apparatus caches the first set of trusted measurement expected values locally and then performs dynamic measurement monitoring on the trusted boot process of the computing server. In this way, the security master control server does not need to be online all the time, which reduces the possibility of being intruded and attacked. According to the embodiments of the present disclosure, the functions of trusted measurement monitoring and security management are offloaded from the computing server to the trusted measurement apparatus to the greatest extent, so that trusted measurement does not occupy the computing resources, and not only security management and control can be realized, but also the computing resources can be reserved to the greatest extent.

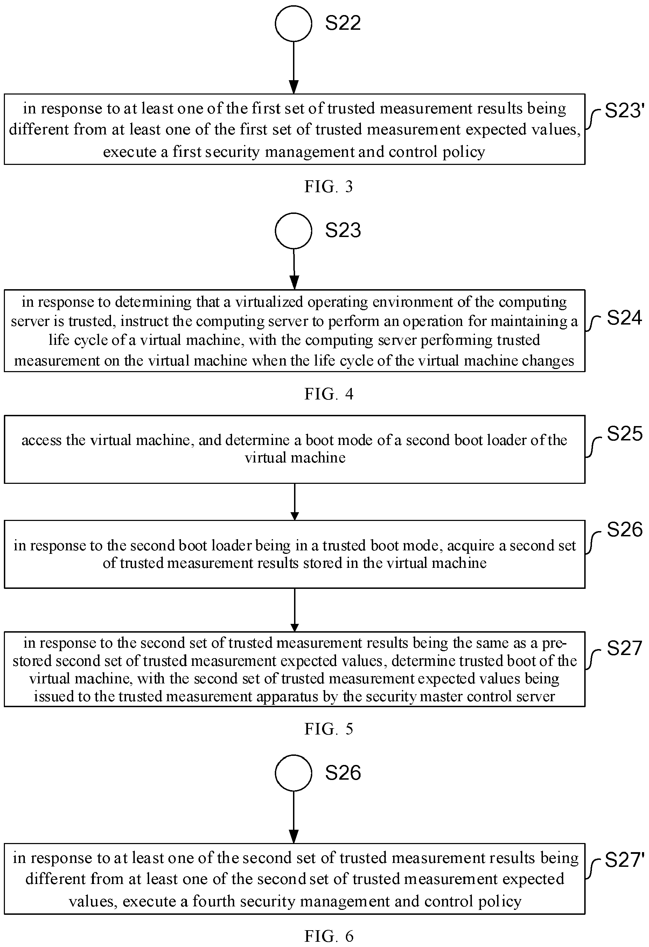

In some embodiments, as shown in FIG. 3, after acquiring the first set of trusted measurement results stored in the computing server (i.e., operation S22), the method further includes the following operation S23'.

At operation S23', in response to at least one of the first set of trusted measurement results being different from at least one of the first set of trusted measurement expected values, executing a first security management and control policy.

If the first set of trusted measurement results are not completely the same as the first set of trusted measurement expected values cached in the trusted measurement apparatus 1, it is indicated that the computing server 2 may possibly be altered illegally, or the operating system and software of the computing server 2 need to be updated and upgraded, or a measurement range of the computing server 2 needs to be adjusted. Therefore, the preset first security management and control policy is executed in this case.

In some embodiments, the first security management and control policy includes at least one of: sending a first security alarm to a preset server; instructing the computing server to upgrade the operating system of the computing server; or instructing the computing server to adjust a trusted measurement range of the computing server.

It should be noted that the preset server which receives the first security alarm may be the security master control server 3, or another cloud server.

In some embodiments, in the case of the trusted boot of the trusted measurement apparatus 1, the trusted measurement method further includes: in response to a first preset condition being met, executing a second security management and control policy. The first preset condition includes at least one of: the computing server is not successfully connected after a first preset duration passes; the first set of trusted measurement results stored in the computing server are not acquired; the number of the first set of trusted measurement results is less than the number of the first set of trusted measurement expected values; or the first boot loader is in an untrusted boot mode.

In some embodiments, if the trusted boot of the computing server 2 is incomplete, or the virtualization control module of the trusted measurement apparatus 1 fails to be connected to the virtualization control agent module of the computing server 2 within specified time, or the trusted measurement apparatus 1 fails to read the measurement results (i.e., the first set of trusted measurement results) from the security measurement module of the computing server 2 through the virtualization control agent module, the trusted measurement apparatus 1 may execute the preset second security management and control policy. If the trusted measurement apparatus 1 determines that the number of the first set of trusted measurement results is less than the number of the first set of trusted measurement expected values, it is indicated that the trusted boot of the computing server 2 is incomplete.

In some embodiments, the second security management and control policy includes at least one of: sending a second security alarm to a preset server; or instructing to shut down the computing server and lock the boot.

It should be noted that the preset server which receives the second security alarm may be the security master control server 3, or another cloud server. In the case of instructing to shut down the computing server 2 and lock the boot, the trusted measurement apparatus 1 shuts down the computing server 2 through the power management module of the computing server 2 and locks the boot of the computing server 2.

In a scenario where a cloud computing control plane is separated from the computing resources, the virtual machine is deployed on the computing server, and the computing server is merely used as a resource provider and does not have enough information to perform trusted certification and unified management and control on each virtual machine. Therefore, a conventional trusted measurement method for the virtual machine adopts a virtual security chip to perform back-end trusted boot of the virtual machine, and depends on consciousness of the service virtual machine. However, if the virtual machine has a malicious program, the virtual machine does not perform trusted measurement. Whether the virtual machine performs trusted measurement cannot be monitored, which makes it hard to ensure effectiveness of trusted measurement. How to perform dynamic trusted measurement on the operating system of the virtual machine and an important application program running in the virtual machine under such condition so as to ensure security and credibility of the whole cloud platform has become a problem which must be solved.

In the embodiments of the present disclosure, after the computing server 2 is powered on and completes the trusted boot, whether a virtualized operating environment of the computing server 2 is trusted needs to be monitored, so as to further perform an operation for maintaining the life cycle of the virtual machine.

In some embodiments, as shown in FIG. 4, after determining the trusted boot of the computing server (i.e., operation S23), the trusted measurement method may further include the following operation S24.

At operation 24, in response to determining that the virtualized operating environment of the computing server is trusted, instructing the computing server to perform an operation for maintaining the life cycle of the virtual machine, with the computing server performing trusted measurement on the virtual machine when the life cycle of the virtual machine changes.

At this operation, if the trusted measurement apparatus 1 determines the trusted boot of the computing server 2, and the computing server 2 measures the operating system and the VMM in the trusted boot process, the virtualized operating environment of the computing server 2 may be regarded as being trusted. Thus, the virtualization control module of the trusted measurement apparatus 1 may issue a control instruction from a cloud platform control management module to the virtualization control agent module of the computing server 2. The control instruction may include, but is not limited to, a control instruction issued by the security master control server 3 and used for the operation for maintaining the life cycle of the virtual machine, for example, the control instruction may be a control instruction for creating, deleting, restarting, snapshotting, recovering, or migrating the virtual machine. It should be noted that the life cycle of the virtual machine is changed accordingly after the computing server 2 receives and executes the control instruction, and at this time, trusted measurement performed by the computing server 2 on the virtual machine is trigged. The trusted VMM may generate a trusted virtual security measurement module (e.g., a vTPM) for the virtual machine to use while the virtual machine is being created.

In some embodiments, as shown in FIG. 5, after instructing the computing server to perform the operation for maintaining the life cycle of the virtual machine (i.e., operation S24), the trusted measurement method further includes the following operations S25 to S27.

At operation S25, the virtual machine is accessed, and a boot mode of a second boot loader of the virtual machine is determined.

At this operation, the trusted measurement apparatus 1 is connected to the VMM through the virtualization control module and the virtualization control agent module of the computing server 2, has access to the inside of the virtual machine through a virtual machine monitoring channel (e.g., a virtio console channel), and executes a query command related to the virtual security measurement module through the virtualization control agent module, so as to determine whether the boot mode of bootloader (i.e., the second boot loader) of the virtual machine is a trusted boot mode.

At operation S26, in response to the second boot loader being in the trusted boot mode, a second set of trusted measurement results stored in the virtual machine is acquired.

At this operation, in a case where the trusted measurement apparatus 1 determines that the second boot loader is in the trusted boot mode, the virtualization control module of the trusted measurement apparatus 1 reads, through the virtualization control agent module of the computing server 2, the measurement results (i.e., the second set of trusted measurement results) stored in the PCR of the security measurement module of the computing server 2, and the second set of trusted measurement results are the trusted measurement results for the virtual machine. The second set of trusted measurement results includes a plurality of measurement values, e.g., a measurement value of the virtual security measurement module, and a measurement value of an application program of the virtual machine.

At operation S27, in response to the second set of trusted measurement results being the same as a pre-stored second set of trusted measurement expected values, trusted boot of the virtual machine is determined, with the second set of trusted measurement expected values being issued to the trusted measurement apparatus by the security master control server.

At this operation, the trusted measurement apparatus 1 compares each measurement value from the second set of trusted measurement results with each expected value from the pre-stored second set of trusted measurement expected values, and determines the trusted boot of the virtual machine if each measurement result is the same as a corresponding expected value. The security master control server 3 issues the trusted measurement expected values (i.e., the second set of trusted measurement expected values) of the virtual machine running on the computing server 2 to the trusted measurement apparatus 1 in advance through the encrypted network. In some embodiments, the trusted measurement expected values may be issued in response to an active request of the trusted measurement apparatus 1. The trusted measurement expected values may be transmitted through the encrypted network authenticated by the digital certificate, and encrypted and stored in the security measurement module of the trusted measurement apparatus 1. When being used, the trusted measurement expected values may be decrypted with the public key of the digital certificate of the security master control server 3.

In some embodiments, after instructing the computing server to perform the operation for maintaining the life cycle of the virtual machine (i.e., operation S24), the trusted measurement method further includes: in response to a second preset condition being met, executing a third security management and control policy. The second preset condition includes at least one of: the virtual machine is not successfully accessed after a preset duration passes; the second boot loader of the virtual machine is in an untrusted boot mode; or it is determined that the trusted boot of the virtual machine fails.

In some embodiments, if the virtualization control module of the trusted measurement apparatus 1 cannot access the virtual machine within specified time, or the trusted boot of the virtual machine fails, or bootloader of the virtual machine is in the untrusted boot mode, the trusted measurement apparatus 1 may execute the preset third security management and control policy.

In some embodiments, the third security management and control policy includes at least one of: sending a third security alarm to a preset server; or instructing the computing server to suspend operation of the CPU of the virtual machine.

It should be noted that the preset server which receives the third security alarm may be the security master control server 3, or another cloud server.

In some embodiments, as shown in FIG. 6, after acquiring the second set of trusted measurement results stored in the virtual machine (i.e., operation S26), the trusted measurement method further includes the following operation S27' .

At operation S27', in response to at least one of the second set of trusted measurement results being different from at least one of the second set of trusted measurement expected values, executing a fourth security management and control policy.

If the second set of trusted measurement results are not completely the same as the second set of trusted measurement expected values cached in the trusted measurement apparatus 1, it is indicated that the virtual machine may possibly be altered illegally, or the operating system and software of the virtual machine need to be updated and upgraded, or a measurement range of the application program of the virtual machine needs to be adjusted. Therefore, the preset fourth security management and control policy is executed in this case.

In some embodiments, the fourth security management and control policy includes at least one of: sending a fourth security alarm to a preset server; instructing the computing server to upgrade the operating system of the virtual machine; instructing the computing server to adjust a trusted measurement range of the application program of the virtual machine; or sending a measurement-expected-value updating instruction to the computing server, with the measurement-expected-value updating instruction being configured to enable the computing server to update the measurement expected values stored in the virtual machine.

It should be noted that the preset server which receives the fourth security alarm may be the security master control server 3, or another cloud server.

According to the embodiments of the present disclosure, the trusted measurement apparatus 1 initiates the trusted measurement on the virtualized operating environment of the computing server and measures the trusted boot of the virtual machine, so that effectiveness and credibility of the dynamic measurement on the virtualized environment of the host machine and the operating system and the application program of the virtual machine can be effectively ensured.

In some embodiments, the trusted measurement method further includes: receiving, through the encrypted network, at least one set of trusted measurement expected values sent by the security master control server, and locally storing the at least one set of trusted measurement expected values.

At this operation, if the trusted measurement expected values of the trusted measurement apparatus 1, the computing server 2, or the virtual machine on the computing server 2 need to be updated, the security master control server 3 may be powered on merely when the updating is needed, and send the trusted measurement expected values to be updated to the trusted measurement apparatus 1 through the secure network authenticated by the digital certificate for being cached in the trusted measurement apparatus 1. In this way, the security master control server 3 does not need to be online all the time, thereby reducing the possibility of being intruded and attacked.

The embodiments of the present disclosure introduces a dynamic trusted measurement monitoring mechanism initiated by the trusted measurement apparatus 1, the trusted measurement apparatus 1 first receives and caches the trusted measurement expected values from the security master control server 3, and then performs monitoring via the communication interface of the computing server 2 to ensure that the computing server 2 measures bootloader, the operating system, the hypervisor, and the virtualization control agent module of the computing server 2 to complete the trusted boot. Further, the virtual machine running in the computing server 2 is subjected to trusted measurement monitoring, so as to ensure that the virtual machine adopts the trusted boot mode, and the measurement results of the operating system and the important application program in the virtual machine meet expectations.

In order to better explain the technical solution of the present disclosure, the embodiments of the present disclosure are further illustrated by a specific example.

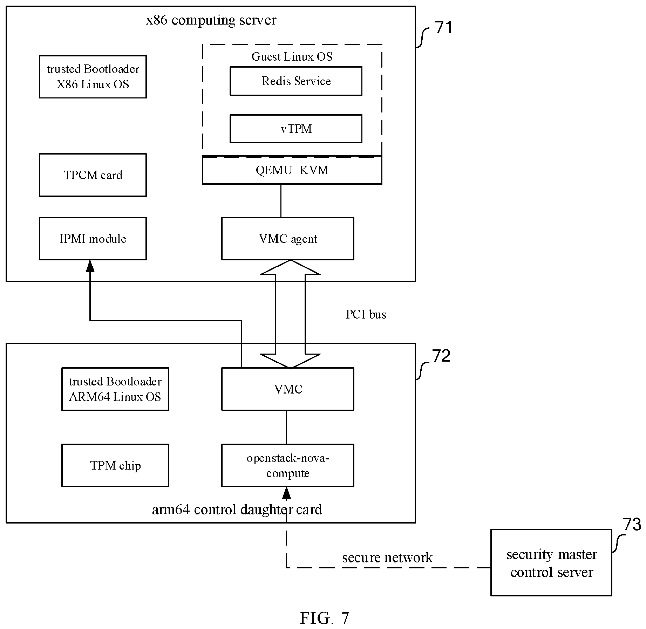

As shown in FIG. 7, the computing server adopts an x86 computing server 71, and the trusted measurement apparatus adopts an arm64 control daughter card 72, and is connected to the x86 computing server 71 via a PCI endpoint interface.

The x86 computing server 71 serves as a physical server for providing computing resources (a CPU, a memory, storage resources, network resources, etc.) for a virtual machine, a CPU of the x86 computing server 71 adopts the x86 architecture having a TPCM card inserted in one PCI slot as a security measurement module, and the TPCM card may be powered on before the CPU is powered on to perform active measurement on BIOS and other hardware. The x86 computing server 71 is further provided with a remote power management module which supports the IPMI protocol and is accessible via an independent power management interface.

The arm64 control daughter card 72 is connected to the x86 computing server 71 via a PCI bus interface. The arm64 control daughter card 72 operates as a PCI endpoint end, and is also provided with a CPU (adopting the arm64 architecture), a memory, a Linux operating system, and an independent security chip (TPM) serving as a security measurement module. The TPM chip is connected to the system via an I2C bus. Moreover, the arm64 control daughter card 72 stores a digital certificate of a security master control server 73, and is connected to the security master control server 73 through a Secure Shell (ssh)-encrypted secure network authenticated by the certificate.

A cloud-platform control agent module in the arm64 control daughter card 72 adopts an openstack-nova-compute service program, and is subjected to trusted measurement as the arm64 control daughter card 72 is started, communicate with openstack components of other cloud platform hosts via network interfaces, and receive management information from a cloud platform administrator. The cloud-platform control agent module in the arm64 control daughter card 72 may also receive, through authentication by the digital certificate, the trusted measurement expected values of the x86 computing server 71 and the virtual machine running on the x86 computing server 71 and store the trusted measurement expected values, with the trusted measurement expected values issued by the security master control server 73 through the encrypted network. The trusted measurement expected values are encrypted with a private key of the security master control server 73 and stored in a secure hardware (the TPM chip) on the arm64 control daughter card 72, and are decrypted with a public key of the digital certificate when being used.

A Virtual Machine Controller (VMC) module serves as a virtualization control module running on the arm64 control daughter card 72, and is connected to a VMC agent module (serving as a virtualization control agent module) on the x86 computing server 71 via the PCI interface to acquire a type and configuration information of the x86 computing server 71, such as a CPU model, a security module model, and a hypervisor type, and may perform command conversion on a virtualization management command issued by the security master control server 73 to perform trusted measurement monitoring on the x86 computing server 71 and the virtual machine, and control a life cycle of the virtual machine by issuing a command to a QEMU (a virtual operating system simulator). The VMC module may be connected to the IPMI power management module of the x86 computing server 71 through a dedicated IPMI interface line to control a power state of the x86 computing server 71.

The VMC agent module resides in the x86 computing server 71 as a virtualization control agent program, is subjected to trusted measurement as the x86 computing server 71 is started, and communicates with the VMC module on the arm64 control daughter card 72 via the PCI bus interface to execute an instruction issued by the VMC module.

The VMM adopts QEMU+KVM (Kernel-based Virtual Machine), serves as an infrastructure of the hypervisor for creating and maintaining of the life cycle of the virtual machine, and is provided with the virtio console technology to access an internal operating system of the virtual machine and execute a corresponding command.

The security master control server 73 serves as a root of trust of the whole cloud platform, and stores the trusted measurement expected values of all arm64 control daughter cards 72, x86 computing servers 71, and the virtual machine. In order to avoid intrusion into the security master control server 73, the security master control server 73 is usually powered off. Merely when the trusted measurement expected values need to be updated, the security master control server 73 is powered on, and issues, through a ssh encrypted network authenticated by the digital certificate, the updated trusted measurement expected values to each arm64 control daughter card 72 for caching or issues the updated trusted measurement expected values in response to an active request of each arm64 control daughter card 72.

An implementation process of the trusted measurement method in the specific example is as follows.

The security master control server 73 issues, through the ssh encrypted network authenticated by the digital certificate, the latest trusted measurement expected values to each arm64 control daughter card 72 to be encrypted and cached in advance.

After the x86 computing server 71 is powered on, the TPCM card starts to operate first, and measures credibility of bios and bootloader according to a built-in root of trust. After it is determined that bios and bootloader are trusted, the CPU starts to be powered on, and trusted bios operates and reads the measurement expected values which are stored in the TPCM card in advance, and then measures the Linux kernel. If the measurement value is the same as the expected value, it is indicated that the Linux kernel is trusted, and then whether the QEMU and the VMC agent module are trusted is determined through dynamic measurement according to the measurement expected values.

Meanwhile, the arm64 control daughter card 72 is also powered on, reads the measurement expected values from the TPM chip while being started, and sequentially performs dynamic trusted measurement on bootloader, the arm Linux kernel, the VMC module, and the openstack-nova-compute service program. The measurement values should be the same as the measurement expected values issued by the security master control server 72, otherwise the boot process is ended.

The VMC module is connected to the VMC agent module running on the x86 computing server 71 via the PCI channel, and first performs trusted measurement on bootloader. After it is determined that bootloader adopts the trusted boot mode, the VMC module reads the PCR values from the TPCM card through the VMC agent module, and compares the PCR values with the trusted measurement expected values cached in the arm64 control daughter card 72 to determine whether the PCR values are the same as the trusted measurement expected values. If the PCR values are the same as the trusted measurement expected values, it is determined that the x86 computing server 71 performs trusted boot.

If it is determined that the trusted boot of the x86 computing server 71 is incomplete, or the VMC module cannot be connected to the VMC agent module within specified time, or the PCR values cannot be read from the TPCM card in the x86 computing server 71 through the VMC agent module, a preset security management and control policy is adopted, for example, the x86 computing server 71 is shut down through the IPMI power management module, the boot of the x86 computing server 71 is locked, and a security alarm is generated.

If the PCR values read in by the VMC module from the TPCM card in the x86 computing server 71 through VMC agent module are not the same as the trusted measurement expected values cached in the arm64 control daughter card 72, it is indicated that the x86 computing server 71 may possibly be altered illegally, or the operating system and software of the x86 computing server 71 needs to be updated and upgraded, or a measurement range of the x86 computing server 71 needs to be adjusted, at this time, the arm64 control daughter card 72 sends a security alarm to the cloud platform through the openstack-nova-compute service program, or the system is upgraded and the dynamic measurement range of the application program is adjusted according to a policy of the cloud platform. During the adjustment, the VMC module may issue an instruction related to the TPCM card through the VMC agent module to update the measurement expected values (the PCR values) in the TPCM card.

When the trusted boot of the x86 computing server 71 is determined and the trusted boot process includes the measurement on the operating system, the QEMU, and the VMC agent module, a virtualized operating environment of the x86 computing server 71 is regarded as being secure and trusted. The VMC module receives the control of the openstack-nova-compute service program, and issues, through the VMC agent module, an instruction to create, delete, restart, snapshot, restore, or migrate the virtual machine on the x86 computing server 71, that is, to control the life cycle of the virtual machine. The trusted QEMU may generate a trusted virtual security module (vTPM) by simulation for the virtual machine to use while the virtual machine is being created.

The VMC module further executes, through the VMC agent module, a query instruction related to the virtual security module (vTPM) inside the virtual machine via a virtio console channel provided by the QEMU. Specifically, the measurement values stored in the PCR of the vTPM are read and compared with the trusted measurement expected values cached in the arm64 control daughter card 72, and it is determined through measurement whether bootloader of the virtual machine is bootloader for trusted boot of the virtual machine as expected by the cloud platform, so that it may be determined whether the internal operating system of the virtual machine is in the trusted boot and whether the important application program (which is a Redis database service program in this example) in the virtual machine passes dynamic measurement in the trusted boot process.

If the VMC module cannot access the inside of the virtual machine within specified time, or the VMC module finds that bootloader of the internal operating system of the virtual machine is untrusted or is not in the trusted boot after accessing the inside of the virtual machine, the VMC module may execute an QEMU instruction through the VMC agent module to implement security measures through the QEMU instruction which include, but are not limited to, suspending operation of the virtual CPU of the virtual machine and generating a security alarm.

If the PCR values read by the VMC module from the vTPM in the virtual machine after the VMC module accesses the inside of the virtual machine through the VMC agent module are not the same as the trusted measurement expected values cached in the arm64 control daughter card 72, it is indicated that the virtual machine may possibly be altered illegally, or the operating system of the virtual machine or the application program in the virtual machine needs to be updated and updated, or a dynamic measurement range of the application program in the virtual machine needs to be adjusted. At this time, a security alarm is generated, and after the security alarm is confirmed by the cloud platform administrator and a user of the virtual machine, the operating system or the application program of the virtual machine may be upgraded, or the dynamic measurement range of the application program in the virtual machine may be adjusted according to a policy of the cloud platform. Then the VMC module may further execute an instruction related to the vTPM in the virtual machine through the virtio console channel provided by the QEMU to update the measurement expected values (the PCR values) in the vTPM in the virtual machine.

When the security master control server 73 needs to update the trusted measurement expected values of the arm64 control daughter card 72, the x86 computing server 71, or the virtual machine on the x86 computing server 71, the security master control server 73 may be powered on merely when the updating is needed, and issue the updated trusted measurement expected values to each arm64 control daughter card 72 for caching through the encrypted network authenticated by the digital certificate.

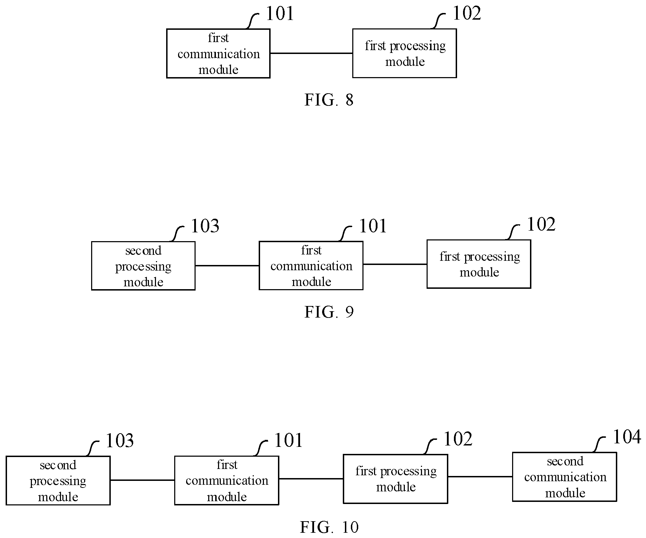

Based on the same technical concept, an embodiment of the present disclosure further provides a trusted measurement apparatus. As shown in FIG. 8, the trusted measurement apparatus includes a first communication module 101 and a first processing module 102.

The first communication module 101 is configured to connect a computing server in a case of trusted boot of the trusted measurement apparatus, and acquire a first set of trusted measurement results stored in the computing server.

The first processing module 102 is configured to determine a boot mode of a first boot loader of the computing server, instruct, in a case of the first boot loader being in a trusted boot mode, the first communication module to acquire the first set of trusted measurement results stored in the computing server, and determine trusted boot of the computing server in response to the first set of trusted measurement results being the same as a pre-stored first set of trusted measurement expected values, with the first set of trusted measurement expected values being issued to the trusted measurement apparatus by a security master control server.

In some embodiments, the first processing module 102 is further configured to, after acquiring the first set of trusted measurement results stored in the computing server, execute a first security management and control policy in response to at least one of the first set of trusted measurement results being different from at least one of the first set of trusted measurement expected values.

In some embodiments, the first security management and control policy includes at least one of: sending a first security alarm to a preset server; instructing the computing server to upgrade an operating system of the computing server; or instructing the computing server to adjust a trusted measurement range of the computing server.

In some embodiments, the first processing module 102 is further configured to, in the case of the trusted boot of the trusted measurement apparatus, execute a second security management and control policy in response to a first preset condition being met. The first preset condition includes at least one of: the computing server is not successfully connected after a first preset duration passes; the first set of trusted measurement results stored in the computing server are not acquired; the number of the first set of trusted measurement results is less than the number of the first set of trusted measurement expected values; or the first boot loader is in an untrusted boot mode.

In some embodiments, the second security management and control policy includes at least one of: sending a second security alarm to a preset server; or instructing to shut down the computing server and lock the boot.

In some embodiments, as shown in FIG. 9, the trusted measurement apparatus further includes a second processing module 103.

The second processing module 103 is configured to, after determining trusted boot of the computing server, instruct the computing server to perform an operation for maintaining a life cycle of a virtual machine in response to determining that a virtualized operating environment of the computing server is trusted. The computing server performs trusted measurement on the virtual machine when the life cycle of the virtual machine changes.

In some embodiments, the second processing module 103 is further configured to, after instructing the computing server to perform the operation for maintaining the life cycle of the virtual machine, access the virtual machine, determine a boot mode of a second boot loader of the virtual machine, acquire a second set of trusted measurement results stored in the virtual machine in response to the second boot loader being in a trusted boot mode, and determine trusted boot of the virtual machine in response to the second set of trusted measurement results being the same as a pre-stored second set of trusted measurement expected values, with the second set of trusted measurement expected values being issued to the trusted measurement apparatus by the security master control server.

In some embodiments, the second processing module 103 is further configured to, after instructing the computing server to perform the operation for maintaining the life cycle of the virtual machine, execute a third security management and control policy in response to a second preset condition being met. The second preset condition includes at least one of: the virtual machine is not successfully accessed after a preset duration passes; the second boot loader of the virtual machine is in an untrusted boot mode; or it is determined that the trusted boot of the virtual machine fails.

In some embodiments, the third security management and control policy includes at least one of: sending a third security alarm to a preset server; or instructing the computing server to suspend operation of a CPU of the virtual machine.

In some embodiments, the second processing module 103 is further configured to, after acquiring the second set of trusted measurement results stored in the virtual machine, execute a fourth security management and control policy in response to at least one of the second set of trusted measurement results being different from at least one of the second set of trusted measurement expected values.

In some embodiments, the fourth security management and control policy includes at least one of: sending a fourth security alarm to a preset server; instructing the computing server to upgrade an operating system of the virtual machine; instructing the computing server to adjust a trusted measurement range of an application program of the virtual machine; or sending a measurement-expected-value updating instruction to the computing server, with the measurement-expected-value updating instruction being configured to enable the computing server to update the measurement expected values stored in the virtual machine.

In some embodiments, as shown in FIG. 10, the trusted measurement apparatus further includes a second communication module 104.

The second communication module 104 is configured to receive, through an encrypted network, at least one set of trusted measurement expected values sent by the security master control server, and locally store the at least one set of trusted measurement expected values.

An embodiment of the present disclosure further provides a computer device, including: one or more processors and a storage device. The storage device has stored thereon one or more programs which, when executed by the one or more processors, cause the one or more processors to implement the trusted measurement method provided in the aforesaid embodiments.

An embodiment of the present disclosure further provides a computer readable medium having stored thereon a computer program which, when executed by a processor, causes the processor to implement the trusted measurement method provided in the aforesaid embodiments.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A trusted measurement method applied to a trusted measurement apparatus, comprising:
in a case of trusted boot of the trusted measurement apparatus, connecting a computing server, and determining a boot mode of a first boot loader of the computing server;
in response to the first boot loader being in a trusted boot mode, acquiring a first set of trusted measurement results stored in the computing server; and
in response to the first set of trusted measurement results being the same as a pre-stored first set of trusted measurement expected values, determining trusted boot of the computing server, wherein the first set of trusted measurement expected values are issued to the trusted measurement apparatus by a security master control server.

2. The method of claim 1, wherein after acquiring the first set of trusted measurement results stored in the computing server, the method further comprises:
in response to at least one of the first set of trusted measurement results being different from at least one of the first set of trusted measurement expected values, executing a first security management and control policy.

3. The method of claim 2, wherein the first security management and control policy comprises at least one of:
sending a first security alarm to a preset server;
instructing the computing server to upgrade an operating system of the computing server;
instructing the computing server to adjust a trusted measurement range of the computing server.

4. The method of claim 1, wherein in the case of the trusted boot of the trusted measurement apparatus, the method further comprises:
in response to a first preset condition being met, executing a second security management and control policy,
wherein the first preset condition comprises at least one of:
the computing server is not successfully connected after a first preset duration passes;
the first set of trusted measurement results stored in the computing server are not acquired;
a number of the first set of trusted measurement results is less than a number of the first set of trusted measurement expected values;
the first boot loader is in an untrusted boot mode.

5. The method of claim 4, wherein the second security management and control policy comprises at least one of:
sending a second security alarm to a preset server;
instructing to shut down the computing server and lock the boot.

6. The method of claim 1, wherein after determining the trusted boot of the computing server, the method further comprises:
in response to determining that a virtualized operating environment of the computing server is trusted, instructing the computing server to perform an operation for maintaining a life cycle of a virtual machine,
wherein the computing server performs trusted measurement on the virtual machine when the life cycle of the virtual machine changes.

7. The method of claim 6, wherein after instructing the computing server to perform the operation for maintaining the life cycle of the virtual machine, the method further comprises:
accessing the virtual machine, and determining a boot mode of a second boot loader of the virtual machine;
in response to the second boot loader being in a trusted boot mode, acquiring a second set of trusted measurement results stored in the virtual machine; and
in response to the second set of trusted measurement results being the same as a pre-stored second set of trusted measurement expected values, determining trusted boot of the virtual machine, wherein the second set of trusted measurement expected values are issued to the trusted measurement apparatus by the security master control server.

8. The method of claim 7, wherein after instructing the computing server to perform the operation for maintaining the life cycle of the virtual machine, the method further comprises:
in response to a second preset condition being met, executing a third security management and control policy,
wherein the second preset condition comprises at least one of:
the virtual machine is not successfully accessed after a preset duration passes;
the second boot loader of the virtual machine is in an untrusted boot mode;
it is determined that the trusted boot of the virtual machine fails.

9. The method of claim 8, wherein the third security management and control policy comprises at least one of:
sending a third security alarm to a preset server;
instructing the computing server to suspend operation of a Central Processing Unit, called CPU, of the virtual machine.

10. The method of claim 7, wherein after acquiring the second set of trusted measurement results stored in the virtual machine, the method further comprises:
in response to at least one of the second set of trusted measurement results being different from at least one of the second set of trusted measurement expected values, executing a fourth security management and control policy.

11. The method of claim 10, wherein the fourth security management and control policy comprises at least one of:
sending a fourth security alarm to a preset server;
instructing the computing server to upgrade an operating system of the virtual machine;
instructing the computing server to adjust a trusted measurement range of an application program of the virtual machine;
sending a measurement-expected-value updating instruction to the computing server, wherein the measurement-expected-value updating instruction is configured to enable the computing server to update the measurement expected values stored in the virtual machine.

12. The method of any one of claims 1 to 11, further comprising:
receiving, through an encrypted network, at least one set of trusted measurement expected values sent by the security master control server, and locally storing the at least one set of trusted measurement expected values.

13. A trusted measurement apparatus, comprising: a first communication module and a first processing module, wherein
the first communication module is configured to:
connect a computing server in a case of trusted boot of the trusted measurement apparatus, and
acquire a first set of trusted measurement results stored in the computing server; and
the first processing module is configured to:
determine a boot mode of a first boot loader of the computing server, instruct, in a case of the first boot loader being in a trusted boot mode, the first communication module to acquire the first set of trusted measurement results stored in the computing server, and determine trusted boot of the computing server in response to the first set of trusted measurement results being the same as a pre-stored first set of trusted measurement expected values, wherein the first set of trusted measurement expected values are issued to the trusted measurement apparatus by a security master control server.

14. A computer device, comprising:
one or more processors; and
a storage device having one or more programs stored thereon;
wherein when the one or more programs are executed by the one or more processors, the one or more processors are caused to implement the trusted measurement method of any one of claims 1 to 12.

15. A computer readable medium having stored thereon a computer program which, when executed by a processor, causes the processor to implement the trusted measurement method of any one of claims 1 to 12.
